# EUROPÄISCHE PATENTANMELDUNG

(11) **EP 2 642 495 A2**
(43) Veröffentlichungstag der Anmeldung: **25.09.2013**
(21) Anmeldenummer: 13001281.8
(22) Anmeldetag: 13.03.2013
(51) Int. Cl.: H01F 7/18, F01L 9/04, F16K 31/06

(54) **Verfahren zur Ansteuerung einer stetig verstellbaren hydraulischen Ventileinrichtung und stetig verstellbare hydraulische Ventileinrichtung**

(30) Priorität: 23.03.2012 DE 102012005953
(71) Anmelder: Robert Bosch GmbH, 70442 Stuttgart (DE)
(72) Erfinder: Schmidt, Stefan, 97816 Lohr am Main (DE)
(74) Vertreter: Wiesmann, Stephan

(57) **Zusammenfassung**

Offenbart sind ein Verfahren zur Ansteuerung einer stetig verstellbaren hydraulischen Ventileinrichtung und eine nach einem derartigen Verfahren angesteuerte stetig verstellbare hydraulische Ventileinrichtung, bei der ein Ventilglied mittels eines Betätigungsmagneten verstellbar ist. Dieser wird nach Art einer ballistischen PWM mit variabler Pulsdauer angesteuert.

## Beschreibung

Die Erfindung betrifft ein Verfahren zur Ansteuerung einer stetig verstellbaren hydraulischen Ventileinrichtung gemäß dem Oberbegriff des Patentanspruches 1 und eine hydraulische Ventileinrichtung zur Durchführung des Verfahrens.

Stetig verstellbare hydraulische Ventileinrichtungen werden zur Steuerung von Druckmittelvolumenströmen eingesetzt. Üblicher Weise werden dafür proportional verstellbare Ventile verwendet, deren Ventilglied hydraulisch oder elektrisch stetig verstellbar ausgeführt ist, um einen Öffnungsquerschnitt für den Druckmittelvolumenstrom einzustellen. Bei elektrisch verstellbaren Proportionalregelventilen kann die Pulsweitenmodulation (PWM) benutzt werden, um den Strom am Betätigungsmagneten einzustellen. Die Frequenz der Pulsweitenmodulation ist dabei kleiner als eine maximale Schaltfrequenz des Ventils eingestellt. Die PWM-Pulse werden in einer Spule des Betätigungsmagneten zu einem Durchschnittswert geglättet. Der Ventilschieber ist über eine Feder entgegen der Wirkrichtung des Betätigungsmagneten beaufschlagt. Die sich bei der Verstellung einstellende Federkraft entspricht einer Kraft, bei der die Feder und damit der Ventilschieber einen dem Strom entsprechenden Weg zurücklegen. Die Feder ist so ausgelegt, dass sie bei einer maximalen Bestromung in eine Stellung verstellt werden kann, die der maximalen Öffnungsstellung des Ventilschiebers entspricht.

In den letzten Jahren hat sich die so genannte Digitalhydraulik etabliert, bei der anstelle von Proportionalregelventilen Schaltventile verwendet werden, die durch Pulse nach Art einer PWM angesteuert werden. Unter dem Begriff "Schaltventil" soll hier insbesondere ein Ventil verstanden werden, das ein bewegliches Ventilglied aufweist, das mittels einer Feder in Richtung einer Grundstellung (beispielsweise geschlossen) vorgespannt wird und in eine Schaltstellung (beispielsweise offen) verstellbar ist. Diese Schaltstellung wird durch Bestromen eines Betätigungsmagneten eingenommen. Dabei wird vorausgesetzt, dass die das Ventilglied in Richtung der Grundstellung vorspannende Feder im Vergleich zur Kraft des Betätigungsmagneten bei Nennbestromung sehr gering ist, so dass nur eine vergleichsweise kurze Zeit (bei schnellen Schaltventilen 2 ms) erforderlich ist, um nach Anlegen des Stroms an den Betätigungsmagneten das Schaltventil in die Schaltstellung durchzuschalten.

Durch die Wahl der Pulsfrequenz und der Pulsdauer kann dann über ein derartiges Schaltventil, ähnlich wie bei einem proportional verstellbaren Ventil ein Druckmittelvolumenstrom eingestellt werden.

Die Funktion von proportional verstellbaren Wegeventilen kann dann durch eine Verschaltung mehrerer derartiger Schaltventile realisiert werden. Eine derartige Lösung ist beispielsweise in der WO 2002/086 327 A1 gezeigt.

Vorteile dieser Digitaltechnik gegenüber der herkömmlichen Lösung mit proportional verstellbaren Wegeventilen besteht darin, dass aufgrund der Verwendung von vergleichsweise einfach aufgebauten, weitgehend baugleichen Schaltventilen ein vergleichsweise geringer Kostenaufwand erforderlich ist. Ein weiterer Vorteil besteht darin, dass durch die Verwendung von in Sitzventiltechnik ausgeführten Schaltventilen eine leckagefreie Absperrung zum angesteuerten Verbraucher möglich ist. Durch die Verwendung dieser Schaltventile können die den Druckmittelvolumenstrom von einer Pumpe zum Verbraucher oder von diesem zum Tank bestimmenden Steuerkanten unabhängig von einander angesteuert werden, so dass beispielsweise das Entstehen von Kavitationen in der Tankleitung aufgrund von gleichzeitigem und schnellem schließen des Druck- und Tankanschlusses durch unabhängiges betätigen vermieden werden können. Ebenso kann durch die Unabhängigkeit der Steuerkanten der Energieverbrauch optimiert werden. Ein weiterer Vorteil der Digitalhydraulik besteht darin, dass durch die Abbildung eines Mehrwegeventils durch eine Vielzahl von Schaltventilen die Fehlfunktion eines einzigen dieser Schaltventile durch entsprechende Ansteuerung der anderen Schaltventile weitestgehend kompensiert werden kann, so dass damit nur geringe Beschränkungen der Funktion einhergehen, während die Folgen beim Ausfall eines proportional verstellbaren Wegeventils deutlich schwerwiegender sind.

Die bei der Digitalhydraulik verwendeten Schaltventile haben darüber hinaus den Vorteil, dass sie bei vergleichsweise kleinen und großen Steuersignalen in etwa das gleiche Verhalten im Hinblick auf die Dynamik aufweisen. Herkömmliche Wegeventile zeigen bei vergleichsweise großen Steuersignalen eine deutlich geringere Dynamik als bei vergleichsweise kleinen Steuersignalen.

Die Grundlagen der Digitalhydraulik sind in dem Aufsatz "A novel model for optimized developement and application of switching valves in closed loop control", vol. 12, no. 3, November 2011; www.fluidpower.net, veröffentlicht, so dass im Hinblick auf diese Grundlagen auf den vorgenannten Artikel verwiesen wird.

In dieser Veröffentlichung wird auch beschrieben, das Schaltventil nach einer ballistischen Pulsweitenmodulation anzusteuern. Eine übliche Definition der ballistischen Betriebsweise besteht darin, dass die Pulse so kurz sind, dass ein damit angesteuertes Ventil aus seiner federvorgespannten Grundstellung einen Öffnungshub durchführt, aber ohne Erreichen seiner vollständig geschalteten Offenstellung wieder in die geschlossene Grundstellung zurückfällt. D.h. der ballistische Ansteuerpuls besitzt eine PWM-Grundfrequenz, die oberhalb der maximalen Schaltfrequenz des jeweiligen Schaltventils liegt.

Vorversuche zeigten, dass die entstehende Schaltpulsation bei größeren Volumenströmen einen erheblichen Nachteil darstellt.

Demgegenüber liegt der Erfindung die Aufgabe zugrunde, ein Verfahren zur Ansteuerung einer stetig verstellbaren hydraulischen Ventileinrichtung und eine stetig verstellbare hydraulische Ventileinrichtung zu schaffen, durch die ein vorbestimmter Druckmittelvolumenstrom präziser und kontinuierlicher einstellbar ist.

Diese Aufgabe wird im Hinblick auf das Verfahren durch die Merkmalskombination des Patentanspruches 1 und im Hinblick auf die Ventileinrichtung durch die Merkmalskombination des nebengeordneten Patentanspruches 8 gelöst.

Vorteilhafte Weiterbildungen der Erfindung sind Gegenstand der Unteransprüche.

Das erfindungsgemäße Verfahren ist zur Ansteuerung einer stetig verstellbaren hydraulischen Ventileinrichtung vorgesehen, die ein elektrisch betätigtes Schaltventil hat, dessen Betätigungsmagnet nach Art einer Pulsweitenmodulation (PWM) angesteuert werden kann, um ein Ventilglied aus einer Grundstellung in eine Schaltstellung zu bringen. Erfindungsgemäß kann die Pulsdauer während der Pulsweitenmodulation in Abhängigkeit von Bewegungsparametern des Ventilglieds, beispielsweise der erreichten Endposition verändert werden.

Durch eine derartige Ansteuerungsstrategie kann das Schaltventil so angesteuert werden, dass sich eine quasi kontinuierliche Ventilöffnung einstellt, so dass der Druckmittelvolumenstrom mit hoher Präzision und mit sehr geringem vorrichtungstechnischen Aufwand eingestellt werden kann.

Bei den eingangs beschriebenen Lösungen mit konstanter Pulsweitenmodulation ist eine derartige kontinuierliche Öffnung nicht oder nur unzureichend einstellbar.

Erfindungsgemäß erfolgt die Pulsweitenmodulation mit einer Grundfrequenz, die größer als die maximale Schaltfrequenz des Ventils ist (d.h., der nächste Puls kommt, bevor das Schaltventil zurückgeschaltet hat, die PWM-Zykluszeit ist somit kleiner als die Schaltzeit des Schaltventils). Es handelt sich um eine ballistische Pulsweitenmodulation.

Dabei kann die Grundfrequenz im Bereich zwischen dem 1- bis 3-fachen der maximalen Schaltfrequenz liegen.

Bei einem bevorzugten Ausführungsbeispiel der Erfindung erfolgt nach einem oder mehreren Pulsen eine Messung, in der ein Bewegungsparameter des Ventilglieds, beispielsweise die Ventilglied-Ist-Position ermittelt wird und dann in Abhängigkeit von diesem Ist-Bewegungsparameter (Ist-Position) eine Anpassung der Pulsdauer erfolgt. Dementsprechend kann diese Anpassung und Messung jeweils zwischen zwei Pulsen oder nach einer Vielzahl von Pulsen erfolgen.

Der oder die Bewegungsparameter des Ventilglieds können beispielsweise mittels der Gegeninduktion des unbestromten in Bewegung befindlichen Betätigungsmagnetes ermittelt werden. Der Verlauf der Gegeninduktion lässt Rückschlüsse auf die Position des Ankers und somit des Ventilglieds zu.

Bei einer Lösung mit einem etwas erhöhten vorrichtungstechnischen Aufwand können die Bewegungsparameter auch mittels eines geeigneten Aufnehmers, beispielsweise eines Wegaufnehmers erfasst werden.

Die Bewegungsparameter können, wie gesagt, die Ist-Position, eine Wurfbahn oder eine Geschwindigkeit des Ventilglieds sein.

Die erfindungsgemäße hydraulische Ventileinrichtung zur Durchführung des Verfahrens hat ein elektrisch betätigtes Schaltventil, dessen Betätigungsmagnet über eine Steuereinheit nach Art einer Pulsweitenmodulation angesteuert ist, um ein Ventilglied aus einer Grundstellung in eine Schaltstellung zu bringen. Die Steuereinheit ist derart ausgelegt, dass die Einstellung der Pulsweitenmodulation gemäß dem oben diskutierten Verfahren, ggf. mit den jeweiligen Weiterbildungen erfolgt.

Dabei wird es bei einem Ausführungsbeispiel bevorzugt, das Schaltventil stromlos geschlossen auszuführen.

Zur Erfassung der Bewegungsparameter kann die Ventileinrichtung mit einer Messeinrichtung ausgeführt sein, über die beispielsweise die Induktivität des Betätigungsmagneten erfasst werden kann. Alternativ kann auch eine direkte Messung des Bewegungsparameters, beispielsweise der Ist-Position oder des maximalen Hubs des Ventilglieds erfolgen.

Ein bevorzugtes Ausführungsbeispiel der Erfindung wird im Folgenden anhand schematischer Zeichnungen näher erläutert. Es zeigen:
Figur 1 ein Schaltbild einer erfindungsgemäßen hydraulischen Ventileinrichtung zur Druckmittelversorgung eines Verbrauchers;
Figur 2 ein Diagramm zur Verdeutlichung der Ventilöffnung, die sich beim erfindungsgemäßen Verfahren einstellt und
Figur 3 ein entsprechendes Diagramm bei einem herkömmlichen Verfahren.

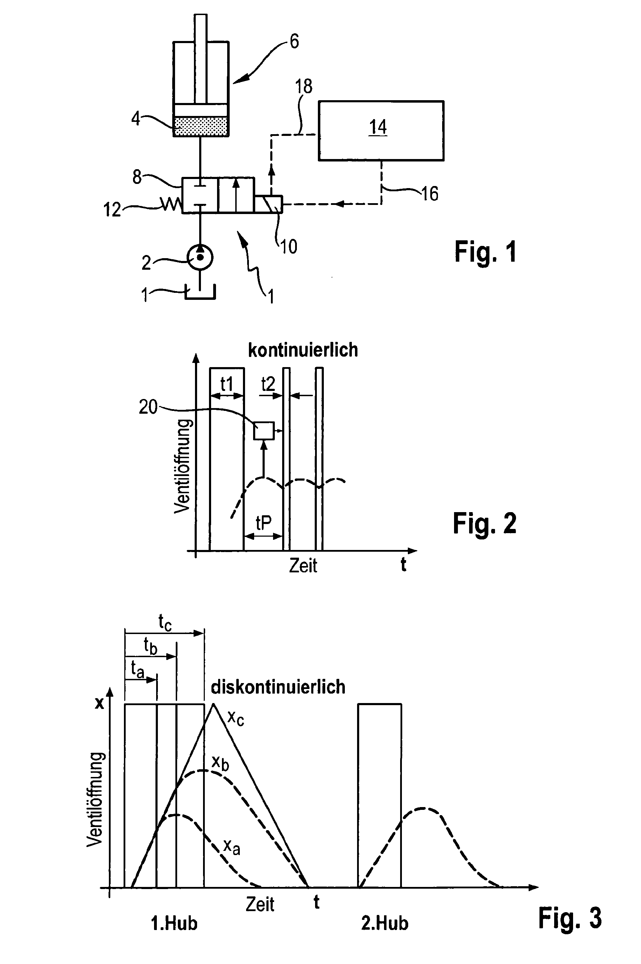

Bei dem in Figur 1 dargestellten Schaltschema dient eine stetig verstellbare hydraulische Ventileinrichtung 1 zur Druckmittelversorgung eines Verbrauchers, wobei beispielhaft lediglich die Druckmittelzufuhr von einer Druckmittelquelle (beispielsweise einer Pumpe 2) zu einem Druckraum 4 eines Verbrauchers 6 gezeigt ist. Die Druckmittelverbindung des Druckraums 4 mit einem Tank T kann über eine entsprechende Ventileinrichtung gesteuert werden. Ebenso kann die Druckmittelzufuhr und Druckmittelabfuhr zum bzw. vom ebenfalls dargestellten kolbenstangenseitigen Ringraum über entsprechende Ventileinrichtungen erfolgen. Die stetig verstellbare hydraulische Ventileinrichtung 1 hat ein Schaltventil 8 nach der eingangs genannten Definition, das mittels eines Betätigungsmagneten 10 aus einer Grundstellung, im vorliegenden Fall eine Stromlos-Geschlossen-Stellung in eine Schaltstellung verstellbar ist, in der die Druckmittelverbindung zwischen der Pumpe 2 und dem Druckraum 4 geöffnet ist. Ein Ventilglied des Schaltventils 8 ist über eine schwache Feder 12 in Richtung der Schließstellung vorgespannt. Die Ansteuerung des Betätigungsmagneten 10 erfolgt über eine Steuereinheit 14. Diese ist derart ausgelegt, dass der Betätigungsmagnet 10 nach Art einer ballistischen Pulsweitenmodulation (PWM) ansteuerbar ist. Die Steuersignalleitung zur Bestromung des Betätigungsmagneten 10 ist in der Darstellung gemäß Figur 1 mit dem Bezugszeichen 16 versehen. Die Ventileinrichtung 1 ist des Weiteren mit einer Messeinrichtung ausgeführt, über die ein Betriebsparameter des Schaltventils 8, vorzugsweise die Position des Ventilglieds erfassbar ist. Die Messeinrichtung kann jedoch zusätzlich oder alternativ auch so ausgelegt sein, dass die ballistische "Wurfbahn" oder die Geschwindigkeit des Ventilglieds erfasst wird und daraus die Ventilgliedposition ableitbar ist. Die Ist-Position des Ventilglieds kann beispielsweise über einen Wegaufnehmer oder dergleichen erfasst werden. Bei einer besonders einfach aufgebauten Lösung wird die Gegeninduktion des Betätigungsmagneten 10 ermittelt und aus dieser Induktivität auf die Position des Ankers des Betätigungsmagneten 10 und somit des Ventilglieds geschlossen. In entsprechender Weise kann über die Induktivität der Scheitelpunkt der Wurfbahn und/oder die Geschwindigkeit des Ventilglieds mittelbar erfasst werden. Das entsprechende Signal, beispielsweise die Ist-Position des Ventilglieds, wird über eine Messsignalleitung 18 zur Steuereinheit 14 gemeldet und in Abhängigkeit von dieser Ist-Position ein Steuersignal für den Betätigungsmagneten 10 generiert.

Figur 2 zeigt ein Diagramm, bei dem die Ventilöffnung in Abhängigkeit von der Zeit dargestellt ist, wobei in dieser Darstellung lediglich ein Bit einer Steuerkante gezeigt ist. Gemäß dem erfindungsgemäßen Konzept wird der Betätigungsmagnet 10 nach Art einer ballistischen PWM angesteuert, wobei zunächst eine vorbestimmte Pulsweite t1 gewählt ist. Die ballistische Pulsfrequenz, hier Grundfrequenz genannt, liegt - wie bereits ausgeführt - über der maximalen Schaltfrequenz des Schaltventils 8. Nach einem oder mehreren dieser Pulse mit der Grundpulsdauer t1 erfolgt in einer Pause zwischen zwei auf einander folgenden Pulsen ein Messvorgang. In dem Diagramm gemäß Figur 2 ist diese Pause mit dem Bezugszeichen tP gekennzeichnet. Während dieser Pause, d.h. nach dem ersten Puls oder einer Folge derartiger Pulse wird über die in Figur 2 angedeutete Messeinrichtung 20 die Ist-Position des Ventilglieds erfasst und über die Messsignalleitung 18 an die Steuereinheit 14 gemeldet. Diese Ist-Position wird dann mit der gewünschten Soll-Position des Ventilglieds verglichen und dann entsprechend der Abweichung zwischen Ist- und Soll-Position das PWM-Signal entsprechend korrigiert. Im vorliegenden Fall wird die Pulsdauer auf ein Maß t2 verringert und entsprechend wieder in einer Messpause tP eine Messung durchgeführt. Bei dem in Figur 2 dargestellten Ausführungsbeispiel wird bei der Pulsdauer t2 und konstanter Pulsfrequenz bereits die gewünschte Ventilöffnung erreicht, die zwar einen geringfügig wellenförmigen Charakter in Abhängigkeit vom PWM-Signal zeigt, jedoch weitestgehend einer kontinuierlichen Ventilöffnung entspricht. D.h. während des Ansteuervorgangs wird über die Steuereinheit 14 das PWM-Signal, vorzugsweise die Pulsdauer und/oder die Pulsfrequenz variiert bis sich die gewünschte Ventilöffnung kontinuierlich einstellt. Diese Ventilöffnung ist in der Darstellung gemäß Figur 2 mit einer gestrichelten Linie angedeutet. Um eine größere Ventilöffnung einzustellen, müsste dann entsprechend die Pulsdauer vergrößert werden, wobei in vorbestimmten Zeitintervallen nach einem oder mehreren Pulsen jeweils eine Messung der vorbeschriebenen Art erfolgt.

Diese vorbeschriebene Strategie mit einer ballistischen PWM ermöglicht eine sehr präzise Einstellung der Ventilöffnung, wobei diese Verstellung störkraftkompensiert und mit einer sehr geringen Temperaturdrift erfolgt. Diese Einstellung ist auch robust gegen elektromagnetische Störungen, da diese durch die periodischen Messvorgänge und entsprechende Korrekturen des PWM-Signals kompensierbar sind. Das Schaltventil mit der Steuereinheit (Pulsansteuerelektronik) ist in eine Positionsregelschleife eingebunden, die die Position des Ventilglieds regelt. Je nach Abweichung der gemessenen Position von der Soll-Position wird dementsprechend die Dauer des nächsten Pulses verlängert oder verkürzt.

Figur 3 zeigt die sich einstellende Ventilöffnung bei einer herkömmlichen Lösung mit einer Ansteuerung des Betätigungsmagneten 10 nach Art einer herkömmlichen ballistischen Pulsweitenmodulation. D.h. bei einer derartigen Vorgehensweise ist die Pulsfrequenz kleiner als die maximale Ventilschaltfrequenz. In Figur 3 rechts sind die Wurfbahnen (Hübe), d.h. die Ventilöffnung Xa, Xb, Xc über der Zeit in Abhängigkeit von verschiedenen Pulsdauern ta, tb, tc gezeigt. In Figur 3 rechts ist der nächste Hub X gezeigt, der sich beispielsweise bei einer Pulsdauer ta einstellt. Man erkennt, dass das Ventil nach jedem Puls schließt. Dadurch ist keine kontinuierliche Ventilöffnung einstellbar.

Demgegenüber ermöglicht das erfindungsgemäße Konzept eine kontinuierliche Ventilöffnung durch ballistische PWM, wobei über die Messeinrichtung eine Aktorauswertung erfolgt. Bei einer Auswertung der Betriebsparameter über die Induktion des Betätigungsmagneten 10 kann in einer PWM-Pause (tP) der Erfolg der Wurfbahn bewertet und korrigiert werden. Ein Schaltventil ist auf diese Weise proportional steuerbar, inklusive der Möglichkeit der Wegrückführung und der Strömungskraftkompensation. Wie anhand Figur 3 dargestellt, ist dies bei herkömmlichen Lösungen mit ballistischer PWM nicht möglich.

Offenbart sind ein Verfahren zur Ansteuerung einer stetig verstellbaren hydraulischen Ventileinrichtung und eine nach einem derartigen Verfahren angesteuerte stetig verstellbare hydraulische Ventileinrichtung, bei der ein Ventilglied mittels eines Betätigungsmagneten verstellbar ist. Dieser wird nach Art einer ballistischen PWM mit variabler Pulsdauer angesteuert.

### Bezugszeichenliste:

| | |
|---|---|
| 1 | Ventileinrichtung |
| 2 | Pumpe |
| 4 | Druckraum |
| 6 | Verbraucher |
| 8 | Schaltventil |
| 10 | Betätigungsmagnet |
| 12 | Feder |
| 14 | Steuereinheit |
| 16 | Signalleitung |
| 18 | Messleitung |
| 20 | Messeinrichtung |

## Patentansprüche

1. Verfahren zur Ansteuerung einer stetig verstellbaren hydraulischen Ventileinrichtung, mit einem elektrisch betätigten Schaltventil (8), dessen Betätigungsmagnet (10) nach Art einer Pulsweitenmodulation (PWM) angesteuert wird, um ein Ventilglied aus einer Grundstellung in eine Schaltstellung zu bringen, **dadurch gekennzeichnet, dass** die Pulsdauer (t1, t2) in Abhängigkeit von der erreichten Endposition des Ventilglieds oder anderen Betriebsparametern verändert wird, um eine vorbestimmte Ventilöffnung einzustellen.

2. Verfahren nach Patentanspruch 1, wobei die PWM mit einer Grundfrequenz erfolgt, die größer als die maximale Schaltfrequenz des Schaltventils ist.

3. Verfahren nach Patentanspruch 2, wobei die Grundfrequenz im Bereich von 1.0 bis 3.0 der Schaltfrequenz liegt.

4. Verfahren nach einem der vorhergehenden Patentansprüche, mit einer Messung nach einem oder mehreren Pulsen, über die ein Ist-Betriebsparameter, beispielsweise die Ist-Position des Ventilglieds ermittelt wird und dann in Abhängigkeit von diesem Ist-Betriebsparameter eine Anpassung der Pulsdauer oder der Pulsfrequenz erfolgt.

5. Verfahren nach einem der vorhergehenden Patentansprüche, wobei der Bewegungsparameter des Ventilglieds mittels der Gegeninduktivität des Betätigungsmagneten (10) erfasst wird.

6. Verfahren nach einem der Patentansprüche 1 bis 4, wobei der Bewegungsparameter des Ventilglieds mittels eines Wegaufnehmers erfasst wird.

7. Verfahren nach Patentanspruch 5 oder 6, wobei der Bewegungsparameter eine Ist-Position, ein Scheitel einer Wurfbahn oder eine Geschwindigkeit des Ventilglieds ist.

8. Stetig verstellbare hydraulische Ventileinrichtung, mit einem elektrisch betätigten Schaltventil (8), dessen Betätigungsmagnet (10) über eine Steuereinheit (14) nach Art einer Pulsweitenmodulation (PWM) angesteuert ist, um ein Ventilglied aus einer Grundstellung in eine Schaltstellung zu bringen, **dadurch gekennzeichnet, dass** die Steuereinheit (14) derart ausgelegt ist, dass die Ansteuerung nach einem Verfahren gemäß einem der vorhergehenden Ansprüche erfolgt.

9. Ventileinrichtung nach Patentanspruch 8, wobei das Schaltventil (8) stromlos geschlossen ausgeführt ist.

10. Ventileinrichtung nach Patentanspruch 8 oder 9, mit einer Messeinrichtung (20) zur Erfassung der Gegeninduktivität des Betätigungsmagneten (10) und zur Berechnung von Bewegungsparametern des Ventilglieds, insbesondere der Ist-Position aus der Gegeninduktivität oder mit einer Messeinrichtung zur direkten Messung der Ist-Position des Ventilglieds.
